# EUROPEAN PATENT APPLICATION

(11) **EP 3 196 007 A1**
(43) Date of publication of application: **26.07.2017**
(21) Application number: 16152309.7
(22) Date of filing: 21.01.2016
(51) Int. Cl.: B32B 5/00, B32B 5/02, B32B 5/10, B32B 5/12, B32B 5/18, B32B 5/22, B32B 5/24, B32B 5/28, B32B 7/00, B32B 7/02, B32B 15/00, B32B 15/04, B32B 15/08, B32B 19/00, B32B 19/02, B32B 19/04, B32B 27/00

(54) **MOULDED TRIM PART FOR A VEHICLE**

(71) Applicant: Autoneum Management AG, 8406 Winterthur (CH)
(72) Inventor: Krause, Wenzel, 8400 Winterthur (CH)

(57) **Abstract**

A moulded trim part for a vehicle, comprising at least one open cell polyurethane foam layer and wherein the trim part further comprises at least one tape consisting of continuous mineral filaments aligned substantially unidirectional and extending longitudinal parallel to the main direction of the at least one tape and wherein the continuous filaments are embedded in a thermoplastic polymer matrix and wherein the at least one tape abuts against and is laminated to at least one surface of the at least one open cell polyurethane foam layer.

## Description

### Technical Field

The present invention is directed to a moulded trim part for a vehicle, preferable in the engine compartment, for instance a hood or bonnet liner or engine bay cover, and a method of producing it.

### Background Art

In the engine compartment of motor vehicles, sound proofing trim parts in the form of absorbers are increasingly being used to reduce engine noise. In general, these absorbers are designed as moulded articles to reduce the exterior and interior noise of vehicles.

For instance, it is known in the art to use engine compartment or engine bay trim parts, also called liners or cladding, such as hood liner, bonnet liner, engine covers or engine shields for reducing noise.

These trim parts are often formed as 3-dimensional structural parts, structural in the sense of being able to mostly keep their shape when mounted on the vehicle.

Known engine compartment trim parts may be made of foam or fibrous material combined with a solid plastic shell or heavy plastic layer to add additional stiffness.

The trim parts may need to be structural in the sense of being able to keep their shape when mounted in particular in horizontal position for instance under a bonnet, without showing too much deflection. These trim parts may need to span a larger distance or area without unacceptable sagging or deflection.

The structural stiffness can be impaired by the harsh conditions these trim parts meet during their lifetime of use on the vehicle. Trim parts in the engine compartment can be subjected to high and low temperatures as well as large temperature changes in a short time. Further these trim parts might be exposed to humidity and liquids from the engine such as lubricants, oils and cooling liquid. These trim parts are also exposed to vibrations which can lead to fatigue problems during the use of the vehicle. Therefore still an amount of sagging may occur during the use of the part over the lifetime of the vehicle.

A lack of structural stiffness might be compensated with the number of mounting points to mount the trim part to the vehicle, in most of the cases these mounting points are arranged around the rim of the trim parts and not necessary across the middle of the structure. An increase of mounting points including means for mounting will add to the overall cost and weight of a part and will increase complexity of production and mounting.

Therefore there is a need for a lightweight trim part, which is able to withstand deflection in particular sagging during use, and forms an alternative solution to the current trim parts, however is able to perform as necessary.

### Summary of invention

The object is achieved by the moulded trim part or cladding for a vehicle according to claim 1.

In a first embodiment of the invention the moulded trim part for a vehicle, comprises at least one open cell polyurethane foam layer, and further comprises at least one tape consisting of continuous mineral filaments aligned substantially unidirectional and extending longitudinal parallel to the main direction of the at least one tape and wherein the continuous filaments are embedded in a thermoplastic polymer matrix and wherein the at least one tape abuts against and is laminated to at least one surface of the at least one open cell polyurethane foam layer.

The at least one tape is laminated together with the at least one open cell polyurethane foam layer without any intermediate layers.

Surprisingly the thermoplastic matrix material stays locally with the embedded filaments after thermal forming adding to increase in bending stiffness.

The at least one tape may be in the form of a strip or beam and is acting as a reinforcing layer increasing the bending stiffness of the moulded trim part. Increased bending stiffness is reducing the defection of the trim part when mounted on the vehicle. The trim part may comprise one or more tapes.

Surprisingly, sufficient bending stiffness can be achieved by using a tape and this without considerable increase in the overall weight of the trim part. Depending on the placement of the tape on the surface a local improvement or an overall improvement of the bending stiffness can be achieved.

Preferable the at least one tape has the form of a strip or beam having a length direction considerable longer that the width. The main direction of the at least one tape is, for such strips or beams, the longitudinal direction. The tape is most effective if it has a clear longitudinal direction but also other shapes are possible. If the tape is in the form of a quadratic layer the main direction of the tape and the longitudinal direction of the continuous filaments is defined as following two of the parallel sides and the direction of the filaments should be in the direction in which the increased bending stiffness is required.

Preferable the tape has a thickness between approximately 0.1 to 0.8 mm, preferable approximately 0.2 to 0.3 mm.

Preferable the thermoplastic polymer is either a copolymer of polyester, or a polyamide, preferable Co-polyamide, polyamide-6 or polyamide-66.

The moulded trim part may comprise one or several tapes of various widths and lengths. If more than one tape is used preferable all tapes are placed on the same side of the trim part. The area of the trim part covered by at least one tape is small relative to the total area of the trim part. The increased bending stiffness of the trim part is coming from the individual tapes and there is no sandwich effect, where the open cell polyurethane foam is constrained between tapes, even though tapes would be placed on both sides of the trim part.

The tape may be in the form of a flat strip with no three dimensional shape such as corrugations. Preferable the tape has a three dimensional shape in the form of at least one crease or corrugation extending longitudinal parallel to the main direction of the continuous filaments.

The continuous filaments embedded in the thermoplastic matrix increases the bending stiffness of the trim part mainly in the longitudinal direction of the filaments. The filaments are continuous in the meaning that they span over the full length of the tape applied on the open cell polyurethane foam layer and the tape has a high tensile strength in the longitudinal direction of the continuous filaments.

A flat strip of the tape is increasing the bending stiffness of the trim part. But since the tape is rather thin, with high tensile strength but rather low bending stiffness, the effect of the tape is limited and a flat tape is less suitable for larger parts like bonnet liners.

The tape or strip may be formed in an irregular shape during moulding of the trim part. Having the advantage that the moulding tool does not have to be modified specially for shaping the tape and the thickness of the foam is not reduced more than necessary.

The strips might be also used in areas where due to the overall shape of the trim part a fold line might occur to stiffen that area locally.

In cases where very high bending stiffness is required the three dimensional shape of the tape can be optimized by moulding it in a specific shape or profile.

Advantageously, the tape is shaped into a three dimensional shape or profile in the form of at least one crease or corrugation extending longitudinal parallel to the main direction of the continuous filaments, thus formed into a beam. By doing so the bending stiffness can be further enhanced considerable.

Preferable the tape, also called unidirectional tape, is flat before moulding and a three dimensional shape is created during moulding of the part.

The continuous filaments may be glass filaments, carbon filaments or basalt filaments or a mixture of at least two of those.

Tapes with continuous filaments made of glass filaments may be called unidirectional glass tapes.

The height of the three dimensional shape of the at least one tape is preferable at least 2 mm, preferable at least 4 mm.

The height of the three dimensional shape of the at least one tape is preferable less than 25 mm, preferable less than 15 mm, preferable less than 10 mm.

Preferable the height of the three dimensional shape of the at least one tape is not higher than the thickness of the open cell polyurethane foam.

Preferable the height of the three dimensional shape of the at least one tape is not higher than 70% of the thickness of the trim part in the area where the at least one tape is applied.

The tape has good heat stability and is therefore suitable for trim part applications in the engine compartment.

The polyurethane foam has an open cell structure and therefore good sound absorption properties. The tape is impervious and forms a barrier for any noise passing through and would block locally the noise from entering the foam layer underneath. The tape is therefore preferable placed on the side of the trim part facing away from the sound source, for example in the case of a bonnet or hood liner the tape is preferable paced on the side facing the hood and not the side facing the engine.

If the tape is formed in a 3 dimensional shape for instance a beam, the foam underneath will be slightly reduced in absorption, however as the size of the tape or tapes is not large in comparison to the overall size of the trim part, the reduction of the absorption overall is minimal in comparison to using stiffening layers or plastic shell covering the whole part as is done in the state of the art.

Depending on the size, shape, number and position of the fixation points the overall bending stiffness of the moulded trim part can be optimized by the position, the three dimensional shape of the cross section of the tape, the size of the tape and the number of tapes used.

In one embodiment of the invention the at least one tape is a pultruded continuous filament reinforced thermoplastic tape. The tape may also be called profile or layer.

The width of the at least one tape is preferable between 15 to 150 mm , preferable 30 to 120 mm, preferable 50 to 100mm. The width of the tape on a moulded part, in particularly in a 3 dimensional moulded form, is measured in-plane following the surface contour of the cross section profile of the tape, perpendicular to the main direction of the continuous filaments.

The width of the tape can be measured using a measuring tape or another suitable device, measuring by following the surface contour in plane perpendicular to the main direction of the continuous filaments. The measurement of the width should be seen as approximate and a rather large tolerance of +/- 2mm is acceptable.

Not only the height of the three dimensional shape is important for the bending stiffness, but also width and number of corrugations. A wider tape may have a higher bending stiffness, but is increasing the cost and weight of the trim part.

The three dimensional shape of the tape can be either formed before moulding the trim part or can be shaped during the moulding of the trim part. For instance by adapting one of the surfaces of the mould facing the tape in the area of the tape. Shaping during moulding is preferred as it simplifies the production steps. By shaping the tape during moulding a better connection and forming of the foam around the tape can be achieved.

The open cell polyurethane foam has preferable a density of 8 to 20kg/m³ preferable 10 to 17kg/m³.

The open cell polyurethane foam has preferable an air flow air flow resistance preferable in the range of 100 to 5000 (N.s/m³), preferable in the range of 200 to 3000 (N.s/m³), measured according to the current ISO 9053 (method A).

Also the trim part, after moulding and lamination is preferable air permeable and has an airflow resistance, in the areas where no tape is present, preferable in the range of 100 to 5000 (N.s/m³), preferable in the range of 200 to 3000 (N.s/m³), measured according to the current ISO 9053 (method A).

The open cell polyurethane foam has preferable a thickness before moulding between approximately 6 and 45 mm. The trim part, after moulding and lamination has preferable a thickness between approximately 5 and 40 mm.

In a further embodiment of the invention the moulded trim part for a vehicle, may further comprise at least one of a film layer, preferable a thermoplastic polyurethane film layer or a metal layer, preferable aluminium, a nonwoven scrim layer or a coating layer, for instance to protect the foam layer, for aesthetics or for thermal protection. Preferable the part may have layers at both sides of the trim part.

Preferable the layers used are pervious to air, for instance a film layer might be perforated to achieve such.

For protection and aesthetics the layers used can have a low air flow resistance to enable the noise to reaching the foam. The main purpose of the scrim layer might be to cover and protect the open cell polyurethane foam layer as well as the at least one tape. The additional layer can be chosen such that the tape is not visible on the surface of the trim part produced.

The airflow resistance of such layers is preferable below 500 (N.s/m³), preferable below 200 (N.s/m³) measured according to the current ISO 9053 (method A)

For a further enhancement of the acoustic properties of the trim part also at least the side facing the noise source may be covered by a scrim with a high air flow resistance. The airflow resistance of the scrim layer is preferable above 500 (N.s/m³), preferable between 1000 and 3000 (N.s/m ³), preferable between 1200 and 2000 (N.s/m³) measured according to the current ISO 9053 (method A).

The at least one tape can also be positioned in between at least two open cell polyurethane foam layers to obtain noise absorption on both sides of the part. Also this version can be combined with additional layers as described.

Preferable the open cell polyurethane foam is semi rigid polyurethane foam. Within the scope of the present invention, semi rigid foam is understood as foam having a compression stress value at compression of 40% (CV40) measured according to the current ISO 3386/1 based on the first measurement cycle, of less than 50kPa, preferable less than 40kPa.

The polyurethane (PUR) foam is preferable skinless foam to obtain the full acoustic benefit of the open cell structure. Slab foam, produced continuously or discontinuously, is most preferred, as this foam is cut into sheets after foaming and curing, therefore the open cell structure is directly accessible without any skin. Preferable the foam layer is at least short-term thermo stable between 160 and 220°C,

Polyurethane foams are made by addition reaction of polyisocyanates and polyols. Additives are used as required. Examples of PUR foams that can be used in the lining according to the invention are for instance disclosed in EP 0937114 or EP 937109**.**

In particularly for the use in the engine bay area or in areas with an increase thermal load the use of a flame retardant for instance treatment with a liquid and/or solid retardant and or incorporating such a retardant in the foam is favoured. The use of foam with additional graphite for instance as disclosed in EP 1153067 or US 6552098 would be preferred.

The full disclosure of these documents in particularly regarding the production process and the material composition of the slab foam are incorporated herein by reference.

Preferable the density of the foam is between 8 and 20 kg/m³, more preferable between 10 and 17 kg/m³. If the trim part is moulded from a slab foam plate in a 3D shape by locally compressing the foam to different thicknesses, the density may vary.

Industrial available foams, prepared as slab foams, that can be used with the lining according to the invention are for instance ACOUSTIFLEX S15 (semi-rigid), or ACOUSTIFLEX F 25 (flexible) from Huntsmann, or Flexidur 15 FR+ (semi-rigid) or Rigidur 10 (semi-rigid) by Foampartner or the range of Thermoflex semi-rigid foams in different grades and densities made by Eurofoam like for instance Thermoflex 15, Thermoflex 15 MDA, Thermoflex 15 MDA VW, Thermoflex 16, Thermoflex 22 and the flexible Thermoflex foams like T-flex 16 or T-flex 22.

As the open cell foam will add to the overall noise absorption of the trim part according to the invention, the air flow resistance is preferable in the range of 100 to 5000 (N.s/m³) for a thickness of between approximately 6 and 45 mm for the slab foam before moulding.

The air flow resistance measured according to the current ISO 9053, using the direct airflow method (method A).

One way to produce the tape may be by pulling ("pultruding") continuous filaments, through a resin and shaping the filament reinforced resin within a pultrusion die to a tape. In this way the tape contains continuous filaments that are substantially oriented in the longitudinal direction and embedded within a thermoplastic polymer matrix. This tape exhibit a high tensile strength in the longitudinal direction. An example of how the tape can be produced is described in WO 2011/163349**.** However other processes to obtain unidirectional tapes are known in the art.

The continuous filaments are preferable glass filaments, carbon filaments, basalt filaments or a mixture thereof.

Commercial examples of such tapes are for instance fully impregnated continuous filament reinforced tape CELSTRAN^{®} CFR-TP from Celanese or Cetex^{®} TC910 from TenCate.

Preferable the thermoplastic polymer matrix is either a copolymer of polyester, or a polyamide, preferable Co-polyamide, polyamide-6 or polyam ide-66.

It is expected that normal used additives in the basic polyamide recipe are part of the basic polyamide material as claimed, for example chemical compounds to obtain Ultra Violet Resistance, additional chemicals for increasing heat stability or flame retardants.

Preferable the thermoplastic matrix constitutes from about 10 to about 60 weight% of the tape and the continuous filaments constitutes from about 40 to 90 weight% of the tape.

The tape layer does not comprise an additional adhesive layer and only the thermoplastic polymer matrix is forming the adhesion to the at least one open cell polyurethane foam layer.

Continuous filaments are defined as filaments spanning over the complete length of the tape. Filaments, as defined, are also known as endless filaments. It is this feature that enhances the bending stiffness in the longitudinal direction of the tape, and if placed favourable the bending stiffness of the part either locally or overall.

The moulded trim part according to the invention comprising at least one open cell polyurethane foam layer and further comprising at least one tape consisting of continuous mineral filaments aligned substantially unidirectional and extending longitudinal parallel to the main direction of the at least one tape and wherein the continuous filaments are embedded in a thermoplastic polymer matrix and wherein the at least one tape abuts against and is laminated to at least one surface of the at least one open cell polyurethane foam layer may be used as a hood liner, bonnet liner, headliner or engine cover, as well as large vertical panelling or cladding used in the vehicle, preferable in the engine bay area, underneath the vehicle or in the passenger compartment. Further developments of the invention as disclosed and claimed might be used also as such trim parts.

A process for producing the moulded trim part for a vehicle, wherein at least one open cell polyurethane foam layer and at least one tape consisting of continuous mineral filaments aligned substantially unidirectional and extending longitudinal parallel to the main direction of the at least one tape, are put in a mould such that a surface of the at least one foam layer abuts a surface of the at least one tape and converting the at least one foam layer and the at least one tape under heat to form the trim part.

Preferable a three dimensional shape is formed during the moulding process of the trim part. This can be done using a mould having a first mould half and a second mould half forming in closed position the shape of the trim part. The mould half in closed position either directly in touch with the tape or facing the foam surface carrying the tape, forms at least the tape in a three dimensional shape in the form of at least one crease or corrugation extending longitudinal parallel to the main direction of the continuous filaments.

Preferable the at least one foam layer and the at least one tape are converted using pressurized steam.

At least one additional layer may be included in the trim part, preferable at least one of a film layer, preferable a thermoplastic polyurethane or a metal film layer, preferable aluminium, a nonwoven scrim layer, or a coating layer.

Surprisingly the thermoplastic polymer matrix the continuous filaments are embedded in is softening and just melting enough to form a binder to the open cell foam layer abut, however not enough to wick fully into the foam layer. Therefore after demoulding the trim part the continuous filaments are still substantially embedded in the original thermoplastic polymer matrix.

Other features as disclosed for the product might be integrated into the process to obtain the invention.

These and other characteristics of the invention will be clear from the following description of preferential forms, given as non-restrictive examples with references to the attached drawings.

### Brief description of drawings

Figure 1 shows a vehicle with a trim part according to the invention.

Figure 2 A, B and C shows a schematic picture of a trim part according to the invention.

Figure 3 shows a schematic cross section (A- A') of the trim part of figure 2a according to the invention.

Figure 4 shows examples of schematic profile cross sections of three dimensional shapes of the tape.

Figure 5 Shows a schematic picture of a three dimensional shape defining the Pitch (P) and the height (H).

Same elements are numbered the same throughout the figures.

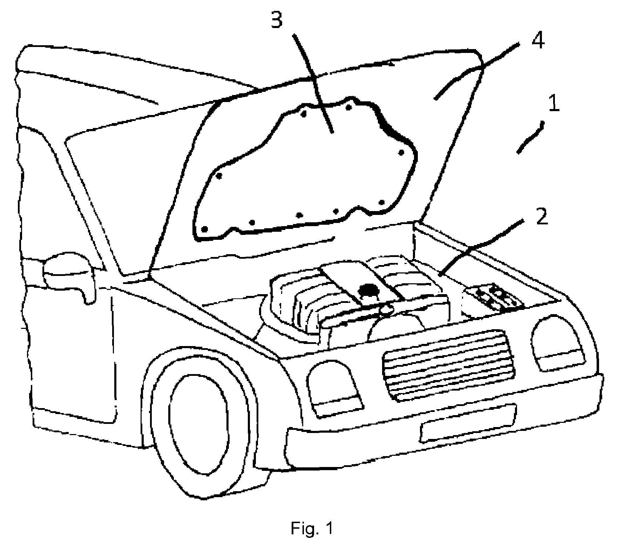

Figure 1 shows a drawing of a vehicle (1) with the hood or bonnet (4) of the engine compartment (2) open, showing an example of a bonnet liner (3), according to the invention. Bonnet liners are mounted on the hood facing the engine, being the source of noise, when the hood is closed. Therefore the trim parts cover a large surface and are hanging substantially horizontal under the hood when it is closed, solely carried by the mounting means. Therefor the main surface area of the trim part is prone to sagging. By using at least one tape according to the invention preferable at the surface facing the bonnet (not shown) the bending stiffness can be enhanced and the sagging prevented.

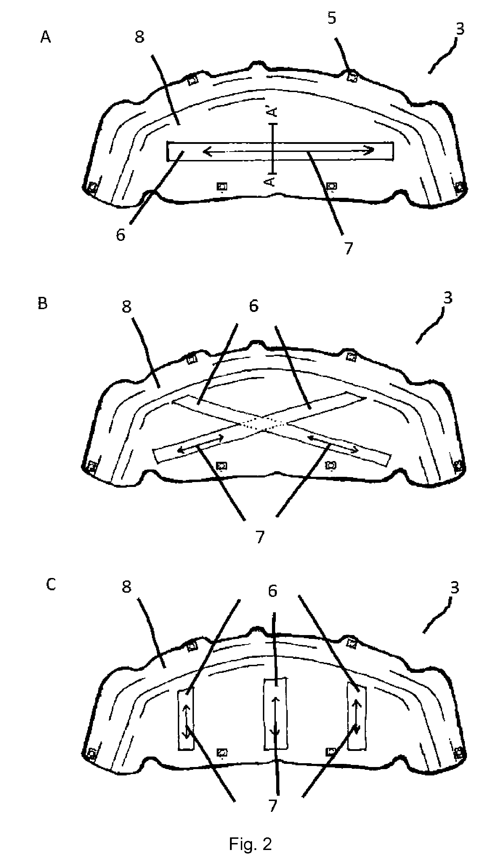

Figure 2 A, B and C show examples of moulded trim parts in the form of bonnet liners (3) according to the invention. The figures show the trim part at the surface normally facing the bonnet or hood inner surface, facing away from the engine as the source of noise. The bonnet liner consist of at least one layer of open cell polyurethane foam (8) with at least one tape (6) placed on the surface of the foam (8) before moulding the part and all layers were moulded together to form the bonnet liner (3) shown in figure A, B and C. Figure A, B and C shown different layouts for the tape.

By using the tape according to the invention deflection of the trim part may be reduced due to the, at least locally increased bending stiffness. Advantageously one or more tapes are applied in the form of a strip or beam. The position of the tape and well as the width, length and the dimensional shape might be designed and optimized in order to achieve the required bending stiffness. The number of fixation points (5) may be reduced when using for example bonnet liners according to the invention; however the number of fixation points is also defined by the design of the vehicle as well as the bonnet liner.

Figure 2A is showing an example of a bonnet liner (3) according to the invention with one tape (6) stretching in longitudinal direction of bonnet liner. The main direction of the continuous filaments in the tape, being longitudinal to the main direction of the tape, is indicated by the arrow (7).

Figure 2b is showing an example of a bonnet liner (3) according to the invention with two tapes (6) crossing the bonnet liner. The main direction of the continuous filaments in the tape, being longitudinal to the main direction of the tape, is indicated by the arrow (7).

Figure 2c is showing an example of a bonnet liner (3) according to the invention with three tapes (6) extending essentially parallel to the short side of the bonnet liner. The main direction of the continuous filaments in the tape, being longitudinal to the main direction of the tape, is indicated by the arrow (7).

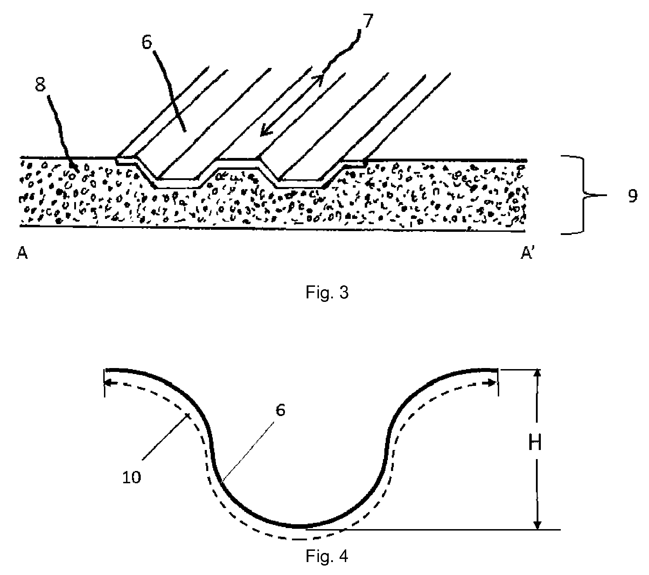

Figure 3 is showing schematic cross section A-A' (9) of the trim part shown in figure 2a. The open cell polyurethane foam layer (8) and the tape (6) are formed to a three dimensional shape and the foam layer is abutting the tape. The main direction of the continuous filaments in the tape, being longitudinal to the main direction of the tape, is indicated by the arrow (7). By forming the tape in a three dimensional shape the tape behaves as a beam further enhancing the bending stiffness. The shape shown is an example with 2 corrugations; preferable at least one corrugation is made. Examples of corrugations can be a wave or wavy curve, or a U or V or W shape, or combinations of shapes.

Figure 4 shows the cross section of an example of a three dimensional formed tape to show that with the height H the actual distance between the lowest point and the highest point of the corrugation or three dimensional shape is meant independent of the shape of the corrugation. Furthermore dashed line 10 shows the way to access the width of the tape following the contour of the profile.

## Claims

1. A moulded trim part for a vehicle, comprising at least one open cell polyurethane foam layer **characterized in that** the trim part further comprises at least one tape consisting of continuous mineral filaments aligned substantially unidirectional and extending longitudinal parallel to the main direction of the at least one tape and wherein the continuous filaments are embedded in a thermoplastic polymer matrix and wherein the at least one tape abuts against and is laminated to at least one surface of the at least one open cell polyurethane foam layer.

2. A moulded trim part for a vehicle according to claim 1, wherein the at least one tape has a thickness between approximately 0.1 to 0.8 mm, preferable approximately 0.2 to 0.3 mm.

3. A moulded trim part for a vehicle according to any of the preceding claims wherein the at least one tape has a three dimensional shape in the form of at least one crease or corrugation extending longitudinal parallel to the main direction of the continuous filaments.

4. A moulded trim part for a vehicle according to any of the preceding claims, wherein the thermoplastic polymer is either a copolymer of polyester, or a polyamide, preferable Co-polyamide, polyamide-6 or polyamide-66.

5. A moulded trim part for a vehicle according to any of the preceding claims, wherein the continuous filaments are glass filaments, carbon filaments or basalt filaments.

6. A moulded trim part for a vehicle according to any of the preceding claims, wherein the height of the three dimensional shape of the at least one tape is at least 2mm, preferable at least 4 mm and the height of the three dimensional shape of the at least one tape is less than 25 mm, preferable less than 15 mm, preferable less than 10 mm

7. A moulded trim part for a vehicle according to any of the preceding claims, wherein the width of the at least one tape is 15 to 150 mm, preferable 30 to 120 mm, preferable 50 to 100mm as measured in-plane following the surface contour of the cross section profile of the tape, perpendicular to the main direction of the continuous filaments.

8. A moulded trim part for a vehicle according to any of the preceding claims, wherein the open cell polyurethane foam has a density of 8 to 20kg/m3 preferable 10 to 17kg/m3.

9. A moulded trim part for a vehicle according to any of the preceding claims, further comprising at least one of a film layer, preferable a thermoplastic polyurethane or a metal film layer, preferable aluminium, a nonwoven scrim layer, or a coating layer.

10. A moulded trim part for a vehicle according to claim 10 wherein the film layer is pervious to air, preferable perforated.

11. Use of the moulded trim part for a vehicle according to any of the preceding claims as a hood liner, bonnet liner, head liner or engine cover.

12. A process for producing the moulded trim part for a vehicle according to any of the proceeding claims, wherein at least one open cell polyurethane foam layer and at least one tape consisting of continuous mineral filaments aligned substantially unidirectional and extending longitudinal parallel to the main direction of the at least one tape, are put in a mould such that a surface of the at least one foam layer abuts a surface of the at least one tape and converting the at least one foam layer and the at least one tape under heat to form the trim part.

13. Process according to claim 12, wherein the mould has a first mould half and a second mould half forming in closed position the shape of the trim part and whereby in closed position of the mould, the mould half directly in touch with the tape or facing the foam surface carrying the tape, forms at least the tape in a three dimensional shape in the form of at least one crease or corrugation extending longitudinal parallel to the main direction of the continuous filaments.

14. Process according to claim 12 or 13 wherein the at least one foam layer and the at least one tape are converted using pressurized steam.

15. Process according to one of the claims 12, 13 or 14 wherein at least one additional layer can be included in the trim part, preferable at least one of a film layer, preferable a thermoplastic polyurethane or a metal film layer, preferable aluminium, a nonwoven scrim layer, or a coating layer.
